# EUROPEAN PATENT SPECIFICATION

(11) **EP 0 591 083 B1**
(45) Date of publication and mention of the grant of the patent: **12.08.1998**
(21) Application number: 93480124.2
(22) Date of filing: 10.09.1993
(51) Int. Cl.: G06K 11/18

(54) **Method and apparatus for interacting with a user interface for a pen-based computing system**
Verfahren und Vorrichtung zur Interaktion mit einer Benutzerschnittstelle eines Griffel verwendendes Rechnersystems
Procédé et dispositif pour interagir avec une interface utilisateur d'un système d'ordinateur utilisant un crayon

(30) Priority: 28.09.1992 US 951977
(43) Date of publication of application: 06.04.1994
(73) Proprietor: International Business Machines Corporation, Armonk, N.Y. 10504 (US)
(72) Inventor: Fitzpatrick, Greg P., Rochester, Minnesota (US); Haynes, Thomas R., Euless, TX 76039 (US)
(74) Representative: de Pena, Alain

(56) References cited:
- DE-A- 3 711 582
- PATENT ABSTRACTS OF JAPAN vol. 013, no. 108 (P-843)15 March 1989 & JP-A-63 286 924 (AMADA METRECS CO LTD) 24 November 1988
- PATENT ABSTRACTS OF JAPAN vol. 008, no. 151 (P-286)13 July 1984 & JP-A-59 047 634 (ZENERARU RESEARCH OBU EREKUTORONITSUKUSU KK) 17 March 1984
- PATENT ABSTRACTS OF JAPAN vol. 008, no. 151 (P-286)13 July 1984 & JP-A-59 047 635 (ZENERARU RESEARCH OBU EREKUTORONITSUKUSU KK) 17 March 1984

## Description

The present invention relates in general to computer systems, and in particular to a pen-like device which interfaces with a user interface on an electronic tablet by manipulation of the pen-like device.

There are many kinds of input devices currently used with computer systems. Having evolved from the days of cards and card readers, the most frequently used input device for a computer system is currently a keyboard. However, a keyboard is not always perceived as a user-friendly device. Thus, the tendency to increase the use of alternative input devices has increased. Such alternative devices include a mouse, a touch-sensitive screen, and a pen-like device.

With the advent of tablet-like computers, a pen-like device (stylus) for use thereon has become more common. An electronic tablet (or Personal Digital Assistant - PDA) is a computer system which takes input on an integral screen from the stylus. The stylus can be used in much the same way as a pen or pencil on a paper tablet. However, the space available on an electronic tablet for writing or drawing is limited due to the size of the tablet and the screen thereon. Therefore, any extraneous information that must utilize the available space of the tablet creates a loss in overall efficiency. Since it is necessary for the tablet and the stylus to interface through various modes of operation, screen space must be used to allow for this interaction/communication. Typically, space is devoted to a menu or toolbar in order to provide the user access to modality change mechanisms. Thus, there is a need for a method and apparatus to interact with the user interface on an electronic tablet that increases the amount of available screen space used for actual operator input. In addition, there is a need for a stylus metaphor which more closely resembles a physical ballpoint pen or mechanical pencil.

This invention provides a stylus for changing modes of operation on an electronic tablet associated therewith, comprising a first end for writing contact between the stylus and the tablet and a clicker located at the end of said stylus opposite said first end, characterized in that the clicker is depressible at a first rate to select one of a plurality of modes of operation and depressible at a second rate different from said first rate to select one of a plurality of options within said mode of operation.

JP-A-63 286 924 reflecting the preamble of claim 1 discloses an input pen for an electronic drafting device having an electronic knock type switch at an end opposite a drafting end, a liquid crystal data display and a rotary command selector switch.

JP-A-59 047 634 discloses a light pen comprising a linear potentiometer for controlling the size of a spot and the thickness of a line on a CRT display.

The present invention provides a method and apparatus for changing the operating modes of an electronic tablet which eliminates or substantially reduces the limitations of the prior art. The present invention allows manipulation of a stylus for selection of various modes of operation without requiring physical contact between the stylus and the user interface.

In accordance with a second aspect of the present invention, a method of changing operating modes on an electronic tablet is provided as set out in claim 8. One of plurality of positions on a stylus is selected for one of a plurality of modes of operation. In one embodiment, a first and second position may be selected for a first and second mode, respectively. The first and second positions are selected by depressing an erase end of the stylus. Once in the first or second mode of operation, various options may be selected therein by depressing the erase end at a rate different from the mode selection rate.

In another aspect of the present invention, the stylus is also adjustable to provide varying line thickness when the stylus contacts the tablet. By turning a top portion of the stylus relative to a bottom portion of the stylus, the line thickness can be varied. Visual feedback of the relative thickness of the line is presented in an indicating window.

It is a technical advantage of the present invention that interface with an electronic tablet is done through manipulation of the stylus used thereon rather than by selecting commands on the screen. It is a further technical advantage of the present invention in that the stylus determines and provides visual feedback on the thickness of a line.

For a more complete understanding of the present invention and the advantages thereof, reference is now made to the Detailed Description taken in conjunction with the attached Drawings, in which:
Figure 1 illustrates an electronic tablet in accordance with the prior art;
Figure 2 illustrates an electronic tablet in accordance with the present invention;
Figure 3 illustrates an embodiment of the stylus in accordance with the present invention;
Figure 4 illustrates the steps used with the stylus of the present invention;
Figures 5A and 5B graphically illustrate use of the stylus of the present invention; and
Figure 6 is a flowchart illustrating the present invention.

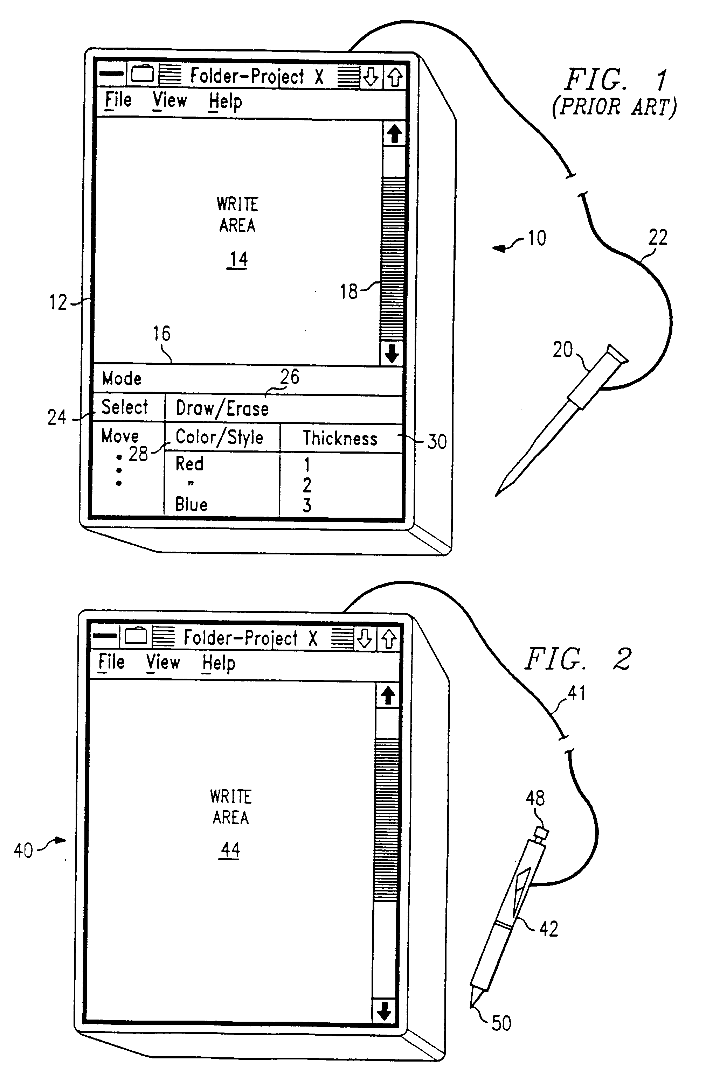

Referring to Figure 1, an electronic tablet 10 constructed in accordance with the prior art is illustrated. The tablet 10 is provided with a screen 12 upon which there is a write area 14, a command area 16, and a scroll area 18. For use with the tablet 10 there is provided a stylus 20 which may be either tethered via electrical connection 22 (as shown) or untethered.

To operate the electronic tablet 10, a user will indicate the mode of operation by touching the appropriate command in the command area 16. For example, there is shown a "Select" mode 24 and a "Draw/Erase" mode 26. By touching the "Select" mode 24, a user may then select which type of activity is desired (for example, to move an object such as with a mouse). By selecting the "Draw/Erase" mode 26, the user may then select the "Color/Style" 28 of the writing and/or the "Thickness" 30 of the writing.

Since the screen 12 is of a limited size (due to cost, weight, convenience, etc.), the command area 16 utilizes valuable space that could be used to increase the available amount of space in the write area 14. Therefore, the prior art mode of selection limits the overall efficiency of the electronic tablet 10.

Referring to Figure 2, an electronic tablet 40 is tethered via electrical connection 41 to a stylus 42 which is constructed in accordance witn the present invention. As a result of the stylus 42, a write area 44 of the tablet 40 is uncluttered with a command area 16 (see Fig. 1) in contrast to the prior art. As will be subsequently described in greater detail, the stylus 42 provides mode selection by manipulation thereof rather than by contact with the screen area 44. Thus, by operating the stylus 42 in a fashion similar to a ballpoint pen or a mechanical pencil, a user is provided with a larger write area 44.

The stylus 42 is provided with a clicker/erase end 48 and a writing end 50. The end 48 operates similarly to a conventional ballpoint pen or mechanical pencil in that by grasping the stylus 42 and depressing the end 48, the stylus 42 will perform various functions in conjunction with the tablet 40.

In accordance with an embodiment of the present invention, the clicker/erase end 48 may be utilized to select among a plurality of operating modes. For example, a first mode may comprise a "Select" mode while a second mode may comprise a "Draw/Erase" mode. To switch between the first and second modes, an operator slowly depresses the end 48. Once in either of the first or second modes, it is possible to select additional options therein by a comparatively faster clicking action with the end 48. Obviously, the clicking rates can be varied, i.e., mode selection can be by fast clicking whereas options can be by slow clicking.

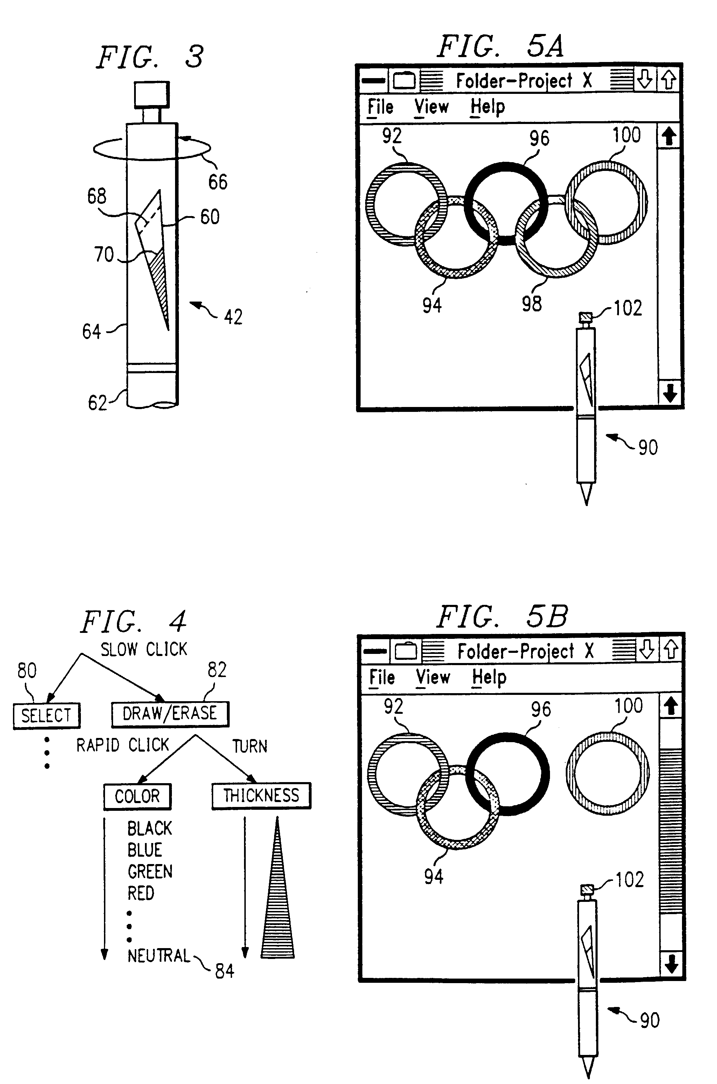

Referring to Figure 3, an embodiment of one aspect of the stylus 42 is illustrated. The stylus 42 is provided with an indicating window 60. By grasping a bottom portion 62 and twisting a top portion 64 of the stylus 42 in a counter-clockwise direction as indicated by arrow 66 (or a clockwise direction, not indicated) an attribute of the stylus 42 may be changed. For example, by rotating the stylus 42 the thickness of a line produced by contact between the writing end 50 and the electronic tablet 40 may be altered. The window 60 will provide an indication of the comparative thickness of the line. As a device within the window 60 moves, for example, from a position indicated by a dashed line 68 to a position indicated by a solid line 70, an operator will be able to get an approximation of the thickness of the line.

Referring to Figure 4, one embodiment of the operation of a stylus constructed in accordance with the present invention is illustrated. By depressing the end 48 (see Fig. 2), a "Select" mode 80 or a "Draw/Erase" mode 82 may be chosen. Once in the "Select" mode 80, a plurality of additional options may then be chosen by rapidly clicking the end 48. These options may comprise, for example, "Select/Deselect", "Open", directly manipulate objects or "Undo/Redo" (i.e., use of the erase end to reverse the last action taken).

In the "Draw/Erase" mode 82, subsequent rapid clicks of the end 48 will change a color of a line produced by contact between the write end 50 of the stylus 42 and the write area 44. If the electronic tablet 40 does not have color capability, the rapid clicks may produce various shades of gray. In one embodiment, a liquid crystal display or other lighting device may be provided in the stylus 42 to correspond to the color selected. Whichever color is selected, the stylus 42 will write only in that color and erase only that color. Obviously, writing is produced by contact between the write end 50 of the stylus 42 and the tablet 40 while erasing is produced by contact with the end 48 of the stylus 42 and the tablet 40.

While in the "Draw/Erase" mode 82, turning of the portion 64 relative to the portion 62 of the stylus 42 will change thickness of the lines produced on the screen 44, as previously described above. If the user wants to erase all colors drawn on the screen, a setting may be provided in the color selection to allow for such action. For example, a Neutral color 84 as shown in Figure 4 could be provided to allow erasure of all colors.

If the stylus is tethered to the electronic tablet with an electrical connection as shown in Figure 2, the signals from the stylus are passed thereby to the tablet. If the stylus is untethered, the signals from the stylus would be transmitted to a receiver in the tablet for execution. In either instance, the equipment necessary for constructing a stylus in accordance with the present invention is known in the art.

Referring to Figures 5A and 5B, a stylus 90 constructed in accordance with the present invention is illustrated. In Figure 5A, five circles 92, 94, 96, 98, and 100 have been drawn using the stylus 90. As indicated by the erase end 102 thereof, (if a color changing light were used, erase end 102 would be the appropriate color) the stylus 90 is set to draw the circle 98. As shown in Figure 5B, the stylus 90 has then been used to erase the circle 98. The stylus 90 may only erase and draw the color the erase end 102 matches.

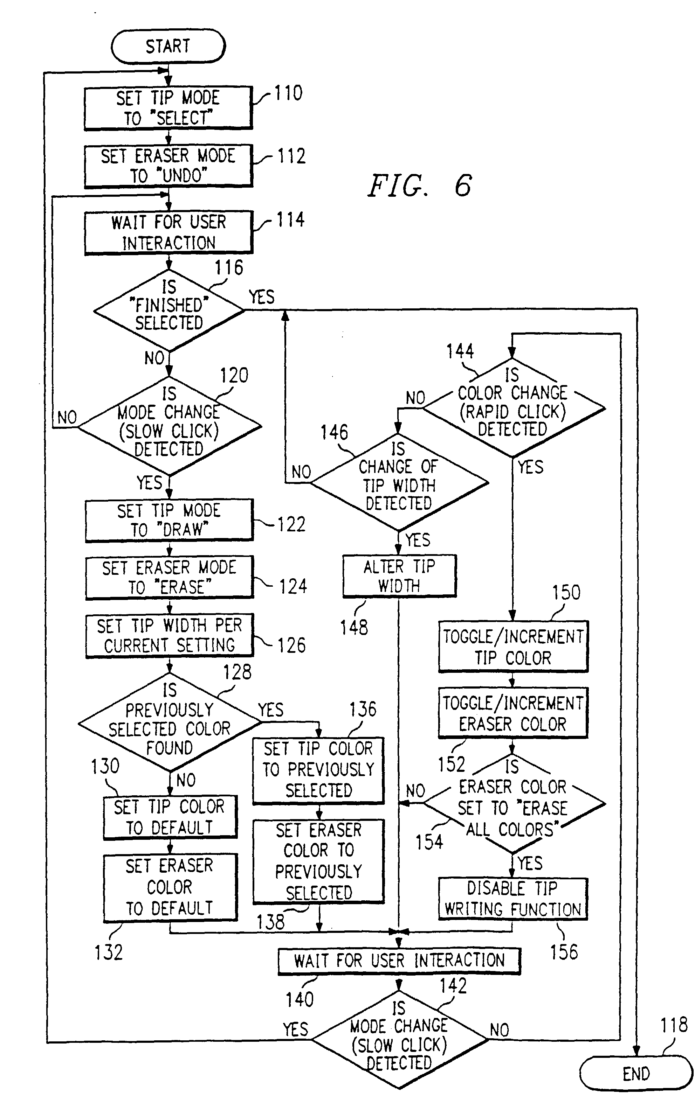

Referring to Figure 6, a flowchart depicting operation of the present invention is illustrated. At block 110, the tip mode is set to "Select". At block 112, the eraser mode is then set to "Undo". At block 114, the present invention waits for user interaction. At decision block 116, it is determined whether or not "Finished" has been selected. If the response to decision block 116 is yes, the present invention ends at 118. If the response to decision block 116 is no, it is determined at decision block 120 whether or not a mode change (slow click) is detected. If the response to decision block 120 is no, the present invention returns to wait for user interaction at block 114. If the response to decision block 120 is yes, the tip mode is set to draw at block 122, and the eraser mode is set to erase at block 124. At block 126, the tip width is set per the current setting on the stylus.

At decision block 128, it is determined whether or not the previously selected color is found. If the response to decision block 128 is no, the tip color is set to a default color at block 130. At block 132, the eraser color is also set to the default color. If the response to decision block 128 is yes, the tip color is set to the previously selected color at block 136, and the eraser color is also set to the previously selected color at block 138. Subsequent to block 132 or block 138, the present invention waits for user interaction at block 140.

At decision block 142, it is determined whether or not a mode change (slow click) is detected. If the response to decision block 142 is yes, the present invention returns to block 110 where the tip mode is set to select.

If the response to decision block 142 is no, it is determined at decision block 144 whether or not a color change (rapid click) is detected. If the response to decision block 144 is no, it is determined at decision block 146 whether or not a change in the tip width is detected. If the response to decision block 146 is no, the present invention ends at 118. If the response to decision block 146 is yes, the tip width is altered at block 148 followed by a return to block 140 to wait for user interaction.

Returning to decision block 144, if the response thereto is yes, the tip color is toggled/incremented at block 150. At block 152, the eraser color is similarly toggled/incremented. At decision block 154, it is determined whether or not the eraser color is set to "Erase All Colors". If the response to decision block 152 is yes, the tip writing function is disabled at block 156. If the response to decision block 154 is no or after block 156, the present invention returns to block 140 to wait for user interaction.

The present invention allows a more intuitive use of a stylus with an electronic tablet. The stylus as disclosed herein operates more like a ballpoint pen or mechanical pencil than heretofore available in the prior art. By "clicking" an erase end of the stylus, various modes of operation may be selected. Once in a particular mode of operation, additional options therein may be selected by "clicking" the erase end of the stylus at a rate faster than the mode selection rate. In one embodiment, visual feedback is provided by liquid crystal diodes in the erase end of the stylus as to the writing and erasing color thereof. Additionally, a visual approximation of the line thickness of the stylus is provided through an indicating window. The thickness of the line is deter- mined by turning the top of the stylus relative to the bottom thereof which also adjusts the visual approximation in the indicating window.

## Claims

1. A stylus (42) for changing modes of operation on an electronic tablet (40) associated therewith, comprising a first end (50) for writing contact between the stylus (42) and the tablet (40) and a clicker (48) located at the end of said stylus (42) opposite said first end (50),
characterized in that
the clicker (48) is depressible at a first rate to select one of a plurality of modes of operation and depressible at a second rate different from said first rate to select one of a plurality of options within said mode of operation.

2. A stylus as claimed in claim 1, wherein said clicker (48) further comprises means for indicating a color of a line drawn or erased by said stylus (42) when the stylus is in a writing mode.

3. A stylus as claimed in claim 2, wherein said means for indicating a color comprises a liquid crystal diode within said clicker (48).

4. A stylus as claimed in any preceding claim, further comprising:
means for adjusting said stylus (42) to provide a varying line thickness when said stylus (42) contacts the tablet in a writing mode.

5. A stylus as claimed in claim 4, wherein said means for adjusting comprises:
means for rotating said first end (50) of the stylus relative to a second end thereof.

6. A stylus as claimed in claim 4 or claim 5, further comprising:
an indicating window (60) for visually displaying an approximation of said line thickness.

7. A computer system comprising an electronic tablet (40) and a stylus (42) as claimed in any preceding claim.

8. A method of changing operating modes on an electronic tablet (40) characterized by depressing a clicker (48) on an end of a stylus (42) opposite a first end (50) for writing contact between the stylus (42) and the tablet (40) at a first rate to select one of a plurality of modes of operation and depressing said clicker (48) at a second rate different from said first rate to select one of a plurality of options within said mode of operation.

9. A method as claimed in claim 8, comprising the step of:
adjusting said stylus to provide a varying line thickness when said stylus contacts the tablet in a writing mode.

10. A method as claimed in claim 9, wherein said step of adjusting comprises the step of:
turning a top portion of said stylus relative to a bottom portion of said stylus.

## Patentansprüche

1. Ein Stift (42) zum Ändern von Betriebsmodi auf einem damit verbundenen elektronischen Tablett (40), wobei der Stift ein erstes Ende (50) für den Schreibkontakt zwischen dem Stift (42) und dem Tablett (40) und einen Klicker (48) umfaßt, der sich am Ende des Stiftes (42) gegenüber dem ersten Ende (50) befindet,
dadurch gekennzeichnet, daß:
der Klicker (48) mit einer ersten Geschwindigkeit gedrückt werden kann, um einen Betriebsmodus aus einer Vielzahl von Betriebsmodi auszuwählen, und mit einer zweiten, von der ersten Geschwindigkeit abweichenden Geschwindigkeit gedrückt werden kann, um eine Option aus einer Vielzahl von Optionen innerhalb dieses Betriebsmodus auszuwählen.

2. Ein Stift gemäß Anspruch 1, bei dem der Klicker (48) weiterhin Mittel zum Anzeigen einer Farbe für eine von diesem Stift (42) gezeichnete oder gelöschte Linie enthält, wenn sich der Stift in einem Schreibmodus befindet.

3. Ein Stift gemäß Anspruch 2, bei dem das Mittel zum Anzeigen einer Farbe eine Flüssigkristalldiode im Klicker (48) enthält.

4. Ein Stift gemäß einem der vorstehenden Ansprüche, der weiterhin folgendes umfaßt:
Mittel zum Anpassen des Stiftes (42) zur Bereitstellung einer unterschiedlichen Linienstärke, wenn der Stift (42) mit dem Tablett in einem Schreibmodus in Kontakt kommt.

5. Ein Stift gemäß Anspruch 4, bei dem das Mittel zum Anpassen folgendes umfaßt:
Mittel zum Rotieren des ersten Endes (50) des Stiftes in Relation zu einem zweiten Ende des Stiftes.

6. Ein Stift gemäß Anspruch 4 oder Anspruch 5, der weiterhin folgendes umfaßt:
Ein Anzeigefenster (60) zur visuellen Darstellung einer Annäherung an die Linienstärke.

7. Ein Computersystem, das ein elektronisches Tablett (40) und einen Stift (42) wie in einem der vorhergehenden Ansprüche niedergelegt enthält.

8. Ein Verfahren zum Ändern von Betriebsmodi auf einem elektronischen Tablett (40), dadurch gekennzeichnet, daß ein Klicker (48) an einem Ende eines Stiftes (42) gegenüber einem ersten Ende (50) zur Herstellung eines Schreibkontaktes zwischen dem Stift (42) und dem Tablett (40) mit einer ersten Geschwindigkeit gedrückt wird, um einen Betriebsmodus aus einer Vielzahl von Betriebsmodi auszuwählen, und daß der Klicker (48) mit einer zweiten, von der ersten Geschwindigkeit abweichenden Geschwindigkeit gedrückt wird, um eine Option aus einer Vielzahl von Optionen innerhalb dieses Betriebsmodus auszuwählen.

9. Ein Verfahren gemäß Anspruch 8, das den folgenden Schritt umfaßt:
Anpassen des Stiftes für eine unterschiedliche Linienstärke, wenn der Stift mit dem Tablett in einem Schreibmodus in Kontakt kommt.

10. Ein Verfahren gemäß Anspruch 9, bei dem der Schritt des Anpassens den folgenden Schritt umfaßt:
Drehen eines oberen Abschnitts des Stiftes in Relation zu einem unteren Abschnitt des Stiftes.

## Revendications

1. Stylet (42) destiné à modifier les modes de fonctionnement sur une tablette électronique (40) associée à celui-ci, comprenant une première extrémité (50) destinée au contact d'écriture entre le stylet (42) et la tablette (40) et un bouton poussoir (48) situé à l'extrémité dudit stylet (42) à l'opposé de ladite première extrémité (50),
caractérisé en ce que
le bouton poussoir (48) peut être enfoncé à une première vitesse pour sélectionner un mode parmi une pluralité de modes de fonctionnement et peut être enfoncé à une seconde vitesse différente de ladite première vitesse afin de sélectionner une option parmi une pluralité d'options à l'intérieur dudit mode de fonctionnement.

2. Stylet selon la revendication 1, dans lequel ledit bouton poussoir (48) comprend en outre un moyen destiné à indiquer une couleur d'une ligne tracée ou effacée par ledit stylet (42) lorsque le stylet est dans un mode d'écriture.

3. Stylet selon la revendication 2, dans lequel ledit moyen destiné à indiquer une couleur comprend une diode à cristaux liquides qui est à l'intérieur dudit bouton poussoir (48).

4. Stylet selon l'une quelconque des revendications précédentes, comprenant en outre :
un moyen destiné à ajuster ledit stylet (42) afin de procurer une épaisseur de ligne variable lorsque ledit stylet (42) entre en contact avec la tablette dans un mode d'écriture.

5. Stylet selon la revendication 4, dans lequel ledit moyen destiné à ajuster comprend :
un moyen destiné à faire tourner ladite première extrémité (50) du stylet relativement à une seconde extrémité de celui-ci.

6. Stylet selon la revendication 4 ou la revendication 5, comprenant en outre :
une fenêtre d'indication (60) destinée à afficher visuellement une approximation de ladite épaisseur de ligne.

7. Système informatique comprenant une tablette électronique (40) et un stylet (42) selon l'une quelconque des revendications précédentes.

8. Procédé de modification des modes de fonctionnement sur une tablette électronique (40), caractérisé par l'enfoncement d'un bouton poussoir (48) sur une extrémité d'un stylet (42) à l'opposé d'une première extrémité (50) destinée au contact d'écriture entre le stylet (42) et la tablette (40) à une première vitesse afin de sélectionner un mode parmi une pluralité de modes de fonctionnement et l'enfoncement dudit bouton poussoir (48) à une seconde vitesse différente de ladite première vitesse afin de sélectionner une option parmi une pluralité d'options à l'intérieur dudit mode de fonctionnement.

9. Procédé selon la revendication 8, comprenant l'étape consistant à :
ajuster ledit stylet afin de procurer une épaisseur de ligne variable lorsque ledit stylet entre en contact avec la tablette dans un mode d'écriture.

10. Procédé selon la revendication 9, dans lequel ladite étape d'ajustement comprend l'étape consistant à :
tourner une partie supérieure dudit stylet par rapport à une partie inférieure dudit stylet.
